# EUROPÄISCHE PATENTSCHRIFT

(11) **EP 2 819 871 B1**
(45) Veröffentlichungstag und Bekanntmachung des Hinweises auf die Patenterteilung: **06.12.2017**
(21) Anmeldenummer: 13707805.1
(22) Anmeldetag: 18.01.2013
(51) Int. Cl.: B60K 37/06, B60K 35/00, B60W 30/182, B60W 50/10, B60W 50/14, B60W 50/08, B62D 15/02, B60K 28/02

(54) **VERFAHREN ZUM BETRIEB EINES FAHRERASSISTENZSYSTEMS ZUR AUTONOMEN LÄNGS- UND/ODER QUERREGELUNG EINES FAHRZEUGS UND FAHRERASSISTENZSYSTEM, DAS NACH EINEM DERARTIGEN VERFAHREN ARBEITET**
METHOD FOR OPERATING A DRIVER ASSISTANCE SYSTEM FOR AUTONOMOUS LONGITUDINAL AND/OR LATERAL CONTROL OF A VEHICLE AND DRIVER ASSISTANCE SYSTEM OPERATING ACCORDING TO SUCH A METHOD
PROCÉDÉ POUR OPÉRER UN SYSTÈME D'ASSISTANCE DU CONDUCTEUR POUR LA COMMANDE LONGITUDINALE ET LATÉRALE D'UN VÉHICULE ET SYSTÈME D'ASSISTANCE DU CONDUCTEUR OPÉRANT SELON UN TEL PROCÉDÉ

(30) Priorität: 01.03.2012 DE 102012101686
(43) Veröffentlichungstag der Anmeldung: 07.01.2015
(73) Patentinhaber: Continental Teves AG & Co. OHG, 60488 Frankfurt (DE)
(72) Erfinder: STRAUSS, Matthias, 64319 Pfungstadt (DE)
(74) Vertreter: Büchner, Jörg
(86) Internationale Anmeldenummer: PCT/DE2013/100015
(87) Internationale Veröffentlichungsnummer: WO 2013/127387

(56) Entgegenhaltungen:
- EP-A2- 2 517 936
- WO-A1-2012/042354
- DE-A1- 4 221 015
- DE-A1-102005 036 923
- DE-A1-102006 058 412
- DE-A1-102009 008 142
- DE-A1-102009 050 404
- DE-A1-102011 101 541

## Beschreibung

Die Erfindung betrifft ein Verfahren zum Betrieb eines Fahrerassistenzsystems, das zur autonomen Längs- und/oder Querregelung eines Fahrzeugs ausgebildet ist, wobei wenigstens eine Regelungsaufgabe zur Längs- und/oder Querregelung des Fahrzeugs vom Fahrzeugführer an das Fahrerassistenzsystem übergeben werden kann. Die Erfindung betrifft weiterhin ein Fahrerassistenzsystem, das zur Umsetzung des erfindungsgemäßen Verfahrens ausgebildet ist.

Fahrerassistenzsysteme zur autonomen Längs- und/oder Querregelung eines Fahrzeugs, d.h. die zur Übernahme einer oder mehrerer Längs- und/oder Querregelungsaufgaben des Fahrzeugs ausgebildet sind, sind aus dem Stand der Technik bereits in unterschiedlichen Ausgestaltungen bekannt. Die Systeme haben in der Regel gemeinsam, dass der Fahrzeugführer eine oder mehrere Regelungsaufgaben zur Längs- und/oder Querregelung bei Bedarf an das jeweilige Fahrerassistenzsystem übergeben kann.

Zu den Regelungsaufgaben betreffend die Längsregelung des Fahrzeugs zählen beispielsweise die Regelung der Längsbeschleunigung und Längsgeschwindigkeit des Fahrzeugs bzw. allgemein der Fahrzeuggeschwindigkeit sowie das Halten eines bestimmten Abstands zu einem vorausfahrenden Fahrzeug. Diese Regelungsaufgaben können entweder manuell vom Fahrzeugführer wahrgenommen werden, insbesondere durch manuelle Regelung bzw. Betätigung von Bremse (Bremspedal) und Gas (Gaspedal), oder autonom durch ein Fahrerassistenzsystem, das mit den entsprechenden Steuerungseinrichtungen im Fahrzeug verbunden ist.

Zu den Regelungsaufgaben betreffend die Querregelung des Fahrzeugs zählen beispielsweise die Regelung der Querbeschleunigung und Quergeschwindigkeit bzw. allgemein der Fahrzeuglenkung sowie das Halten (Spurhaltung) oder Wechseln einer Fahrspur (Spurwechsel), Abbiegen, Fahren durch eine Kurve und/oder Überholen eines anderen Verkehrsteilnehmers. Diese Regelungsaufgaben können ebenfalls entweder manuell vom Fahrzeugführer wahrgenommen werden, insbesondere durch manuelle Regelung bzw. Betätigung der Fahrzeuglenkung (Lenkrad des Fahrzeugs), oder autonom durch ein Fahrerassistenzsystem, das mit den entsprechenden Steuerungseinrichtungen im Fahrzeug verbunden ist.

Es sind auch bereits Fahrerassistenzsysteme bekannt, die Regelungsaufgaben betreffend sowohl die Längs- als auch die Querregelung eines Fahrzeugs in einem System vereinen und damit eine vollständig autonome Regelung eines Fahrzeugs (autonome Fahrzeugführung) durch das Fahrerassistenzsystem ermöglichen.

Die US 6,116,369 A zeigt ein anpassungsfähiges Fahrtregelsystem für ein Fahrzeug, insbesondere ein ACC-System (Adaptive Cruise Control System), das in der Lage ist, in wenigstens zwei Modi zu arbeiten, nämlich in einem ersten Fahrtmodus, in welchem die Geschwindigkeit des Fahrzeugs gesteuert wird, um eine eingestellte Geschwindigkeit zu halten, und einem zweiten Nachfahr-Modus, in welchem die Geschwindigkeit des Fahrzeugs so gesteuert wird, um einen eingestellten Abstand zum voranfahrenden Zielfahrzeug zu halten, wobei das System Mittel, um vom Fahrt-Modus in den Nachfahr-Modus zu schalten, wenn ein Zielfahrzeug innerhalb eines vorbestimmten Abstands zum Fahrzeug erfasst wird, und eine Fahreranzeigeschnittstelle zum Darstellen des Betriebsmodus des anpassungsfähigen Fahrtregelsystems umfasst. Die DE 10 2006 058 412 A1 zeigt ein Spurhaltesystem, bei dem mittels eines Fahrspurerkennungssystems eine vom Fahrzeug befahrene momentane Fahrspur erkannt wird, mittels eines Objekterkennungssystems ein dem Fahrzeug vorausfahrendes Führungsfahrzeug und dessen Bewegungsspur als Objektspur erkannt wird und mittels einer Steuereinrichtung eine Unterstützung beim Halten der Fahrspur realisiert wird, wobei die Steuereinrichtung in einer reinen fahrspurbezogenen Unterstützungsart betreibbar ist, in der die Unterstützung, basierend auf der erkannten momentanen Fahrspur, erfolgt, in einer reinen objektbezogenen Unterstützungsart betreibbar ist, in der die Unterstützung, basierend auf der erkannten Objektspur, erfolgt, und in einer fusionierten Unterstützungsart betreibbar ist, die einer Kombination der fahrspurbezogenen und objektbezogenen Unterstützungsart entspricht, wobei in Abhängigkeit der Fahrgeschwindigkeit des Fahrzeugs festgelegt wird, nach welcher der Unterstützungsarten die Unterstützung erfolgen soll.

Bei Fahrerassistenzsystemen zur autonomen Längs- und/oder Querregelung eines Fahrzeugs kann es vorkommen, dass der Fahrzeugführer aufgrund der Fülle und Vielfalt an Systemen, die in modernen Fahrzeugen eingesetzt werden, worunter auch weitere Systeme wie z.B. Navigationseinrichtungen, Multimediasysteme oder Komfortsysteme fallen, vor einen immer höheren Bedienungsaufwand bzw. vor immer komplexere Bedienungsaufgaben gestellt wird. Viele Systeme greifen in der Regel auf Bedienelemente wie Knöpfe, Hebel oder andere Schaltvorrichtungen zurück.

Der Erfindung liegt daher die Aufgabe zugrunde ein vereinfachtes Bedienkonzept für Fahrerassistenzsysteme zur autonomen Längs- und/oder Querregelung eines Fahrzeugs anzugeben. Es soll insbesondere eine Lösung angegeben werden, mittels der der Bedienaufwand reduziert und die Bedienung von Fahrerassistenzsystemen intuitiver gestaltet werden kann. Diese Aufgabe wird durch ein Verfahren mit den Merkmalen nach Anspruch 1 sowie durch ein Fahrerassistenzsystem mit den Merkmalen nach Anspruch 11 gelöst. Vorteilhafte Ausgestaltungen und Weiterbildungen sind Gegenstand von Unteransprüchen, wobei auch Kombinationen und Weiterbildungen einzelner Merkmale miteinander denkbar sind.

Ein wesentlicher Gedanke der Erfindung besteht darin, die Aktivierung und Deaktivierung eines Fahrerassistenzsystems zur Längs- und/oder Querregelung eines Fahrzeugs derart zu gestalten, dass diese intuitiv und ohne zusätzliche Bedienelemente erfolgen kann. Im Rahmen der Erfindung können im Fahrzeug bereits vorhandene Bedienelemente, wie Pedalen und Lenkrad, genutzt werden, um Regelungsaufgaben an die Fahrerassistenzsysteme zu übergeben. Es ist insbesondere vorgesehen, dass dem Fahrzeugführer angezeigt wird, sobald eine Regelungsaufgabe von einem Fahrerassistenzsystem übernommen werden kann, worauf der Fahrzeugführer, indem er die entsprechenden manuellen Bedienelemente nichtmehr betätigt, die Regelungsaufgabe übergeben kann.

Wesentliche Vorteile der Erfindung und des vorgeschlagenen Bedienkonzepts bestehen darin, dass durch die Information des Fahrers, insbesondere welche Regelungsaufgaben wann übergeben werden können, in Verbindung mit der vereinfachten Übergabe der jeweiligen Regelungsaufgabe, die Aktivierung und Deaktivierung der Fahrerassistenzsysteme erheblich vereinfacht und intuitiver ausfällt. Die Komplexität und der Aufwand der Bedienung eines Fahrerassistenzsystems werden deutlich reduziert. Zudem kann die Akzeptanz bei Fahrzeugführern für derartige Fahrerassistenzsysteme erhöht werden, da die Qualität der Systeme schnell ersichtlich wird, insbesondere wenn angezeigt wird, wann bzw. wie oft und wie lange eine Regelungsaufgabe an das jeweilige System übergeben werden kann.

Ebenfalls kann der vom Fahrzeugführer empfundene Fahrkomfort und das Sicherheitsgefühl deutlich erhöht werden, da z.B. eine sogenannte Mode-Confusion, die entsteht, wenn ein Fahrzeugführer z.B. die Hände vom Lenkrad nimmt, ohne eine autonome Querregelung aktiviert zu haben, nichtmehr entstehen kann, weil die autonome Querregelung im Rahmen der Erfindung in dem Fall vorzugsweise direkt aktiviert oder der Fahrzeugführer direkt informiert wird, das die Regelungsaufgabe momentan nicht übergeben werden kann. Der empfundene Fahrkomfort sowie die Akzeptanz kann weiterhin erhöht werden, da ein Fahrzeugführer bevorzugt sofort wieder die Kontrolle über das Fahrzeug erhält, sobald er die entsprechende manuelle Regelung wieder übernimmt.

Das erfindungsgemäße Verfahren dient zum Betrieb eines Fahrerassistenzsystems, das zur autonomen Längs- und/oder Querregelung eines Fahrzeugs ausgebildet ist, wobei wenigstens eine Regelungsaufgabe zur Längs- und/oder Querregelung des Fahrzeugs vom Fahrzeugführer an das Fahrerassistenzsystem übergeben werden kann. Erfindungsgemäß wird der Fahrzeugführer informiert, ob die wenigstens eine Regelungsaufgabe an das Fahrerassistenzsystem übergeben werden kann, d.h. ob eine oder mehrere Regelungsaufgaben an das Fahrerassistenzsystem übergeben werden können oder nicht. Die Information des Fahrzeugführers kann insbesondere derart erfolgen, dass die Information dem Fahrzeugführer Aufschluss darüber gibt, um welche Regelungsaufgabe bzw. um welche Regelungsaufgaben es sich handelt. Die Information kann weiterhin beispielsweise derart erfolgen, dass ein akustischer, optischer und/oder haptischer Hinweis an den Fahrzeugführer ausgegeben wird, wenn eine oder mehrere Regelungsaufgaben an das Fahrerassistenzsystem übergeben werden können, und hingegen kein Hinweis ausgegeben wird, wenn die eine oder die mehreren Regelungsausgaben nicht an das Fahrerassistenzsystem übergeben werden können.

Gemäß dem erfindungsgemäßen Verfahren erfolgt die Übergabe der wenigstens einen Regelungsaufgabe, wenn der Fahrzeugführer eine entsprechende manuelle Regelung des Fahrzeugs unterbricht. Die Übergabe erfolgt demnach insbesondere derart, dass beispielsweise eine Regelungsaufgabe zur Längsregelung des Fahrzeugs an das Fahrerassistenzsystem übergeben wird, wenn der Fahrzeugführer die entsprechende manuelle Längsregelung unterbricht, beispielsweise die Betätigung des Gaspedals. Die Übergabe einer Regelungsaufgabe zur Querregelung erfolgt erfindungsgemäß bevorzugt dann, wenn der Fahrzeugführer die entsprechende manuelle Querregelung unterbricht, beispielsweise wenn der Fahrzeugführer die Hände vom Lenkrad nimmt. Mit Unterbrechen ist dabei insbesondere das Einstellen bzw. das Beenden einer Betätigung bzw. Bedienung eines zur manuellen Längs- und/oder Querregelung ausgebildeten Bedienelements gemeint.

Es kann insbesondere lediglich ein zusätzliches Bedienelement (Schalter, Knopf, etc.) im Fahrzeug vorgesehen sein, um das Fahrerassistenzsystem, bei dem das erfindungsgemäße Verfahren zum Einsatz kommt, in Betrieb zu nehmen, z.B. ein Bedienelement zum Ausschalten/Einschalten oder zum Schalten in einen Stand-by-Betrieb.

Gemäß einer bevorzugten Ausgestaltung des erfindungsgemäßen Verfahrens, wird der Fahrzeugführer informiert, ob bzw. wenn dieser die wenigstens eine Regelungsaufgabe wieder übernehmen muss, insbesondere dann, wenn vorangehend eine Übergabe der wenigstens einen Regelungsaufgabe an das Fahrerassistenzsystem erfolgt ist bzw. stattgefunden hat.

Die Übernahme der wenigstens einen Regelungsaufgabe durch den Fahrzeugführer, d.h. eine Übergabe der Regelungsaufgabe vom Fahrerassistenzsystem an den Fahrzeugführer, erfolgt dabei erfindungsgemäß dann, wenn der Fahrzeugführer die entsprechende manuelle Regelung des Fahrzeugs wieder aufnimmt, d.h. insbesondere das zur manuellen Durchführung der jeweiligen Regelungsaufgabe ausgebildete Bedienelement wieder bedient. Bei den Bedienelementen kann es sich damit ebenfalls beispielsweise um das Lenkrad und/oder um die Pedalen (Bremse, Gas) des Fahrzeugs handeln.

Gemäß einer weiteren bevorzugten Ausgestaltung des erfindungsgemäßen Verfahrens, wird der Fahrzeugführer mittels einer Ausgabe wenigstens eines Hinweises informiert, ob die wenigstens eine Regelungsaufgabe an das Fahrerassistenzsystem übergeben werden kann bzw. ob der Fahrzeugführer die wenigstens eine Regelungsausgabe wieder übernehmen muss. Die Ausgabe des Hinweises kann dabei beispielsweise mittels optischer Anzeigeelemente im Sichtfeld des Fahrzeugführers, mittels akustischer Signale und/oder mittels haptisch wahrnehmbarer Signaleinrichtungen erfolgen. Bei dem wenigstens einen Hinweise handelt es sich vorzugsweise um die Ausgabe wenigstens einer der folgenden Informationen:
- Regelungsaufgabe kann an das Fahrerassistenzsystem übergeben werden.
- Regelungsaufgabe kann nicht an das Fahrerassistenzsystem übergeben werden.
- Regelungsausgabe muss vom Fahrzeugführer (wieder) übernommen werden.

Dabei können erfindungsgemäß für alle Regelungsaufgaben, die an das Fahrerassistenzsystem übergeben werden können, eigene Hinweise bzw. separate Ausgabeeinrichtungen vorgesehen sein, insbesondere damit der Fahrzeugführer erkennt, welche Regelungsaufgaben aktuell übergeben werden können und welche nicht, sowie welche Regelungsaufgaben wieder von ihm übernommen werden müssen.

In einer vorteilhaften Ausführung des erfindungsgemäßen Verfahrens wird in Abhängigkeit einer oder mehrerer Bedingungen ermittelt, ob die wenigstens eine Regelungsaufgabe an das Fahrerassistenzsystem übergeben werden kann bzw. ob der Fahrzeugführer die Regelungsaufgabe wieder übernehmen muss.

Bei der Ermittlung wird dabei vorzugsweise berücksichtigt, ob die jeweilige Regelungsaufgabe bzw. die jeweiligen Regelungsaufgaben sicher bzw. gefahrlos vom Fahrerassistenzsystem (autonom) übernommen werden können. Bei der einen oder den mehreren Bedingungen handelt es sich vorzugsweise um wenigstens eine der folgenden Bedingungen:
- Einer oder mehrere Sensoren zur Umgebungserfassung sind betriebsbereit
- Zuverlässige Umgebungserfassung mittels eines oder mehrerer Sensoren möglich (beispielsweise bei Erreichen einer ausreichend niedrigen Geschwindigkeit)
- Zuverlässige Erkennung der Fahrspur
- Zuverlässige Erfassung eines Folgeobjekts
- Befahren eines bestimmten Straßentyps
- Überschreiten einer bestimmten Geschwindigkeit
- Unterschreiten einer bestimmten Geschwindigkeit
- Überschreiten eines bestimmten Abstands zu einem vorausfahrenden Fahrzeug
- Unterschreiten eines bestimmten Abstands zu einem vorausfahrenden Fahrzeug
- Fahrzeugführer ist aufmerksam (insbesondere: Fahrzeugführer konzentriert sich auf das Verkehrsgeschehen)

Beispielweise kann als Bedingung für die Übergabe eine Regelungsaufgabe zur Längsregelung und/oder Querregelung des Fahrzeugs vorgesehen sein, dass die Umgebungserfassung mittels Umfeldsensoren zuverlässig erfolgt, z.B. mit einem bestimmten Erfassungsradius, dass die aktuell befahrene Fahrspur zuverlässig erkannt wird, d.h. dass die linke und rechte Fahrspurbegrenzung eindeutig erfasst wird, dass ein vorausfahrendes Objekt erkannt und als Folgeobjekt erfasst ist, dass ein bestimmter Straßentyp befahren wird, z.B. eine Landstraße oder Autobahn, dass eine bestimmte Geschwindigkeit aktuell nicht überschritten oder ein bestimmter Abstand zu einem vorausfahrenden Fahrzeug nicht unterschritten wird. Weiterhin kann als Bedingung festgelegt sein, ob das Fahrzeug Innerorts oder Außerorts geführt wird, da beispielsweise Innerorts die Verkehrssituationen häufig zu komplex sind um eine autonome Längs- und/oder Querregelung des Fahrzeugs durchzuführen.

Die Ermittlung, ob die wenigstens eine Regelungsaufgabe an das Fahrerassistenzsystem übergeben werden kann bzw. ob der Fahrzeugführer die Regelungsaufgabe wieder übernehmen muss sowie insbesondere die Ermittlung der einen oder mehreren Bedingungen kann insbesondere mittels eines oder mehrere Sensoreinrichtungen erfolgen. Fahrerassistenzsysteme, bei welchen das erfindungsgemäße Verfahren zum Einsatz kommen kann, weisen in der Regel ohnehin entsprechende Sensoreinrichtungen auf, die somit hierfür eingesetzt werden können. Bei diesen Sensoren kann es sich z.B. um Radar-Sensoren, optische Kameras, Ultraschall-Sensoren, Lidar-Sensoren oder Infrarot-Sensoren handeln, die am Fahrzeug angeordnet und mit den Fahrerassistenzsystemen verbunden sind.

Gemäß einer vorteilhaften Ausgestaltung des erfindungsgemäßen Verfahrens, überführt das Fahrerassistenzsystem das Fahrzeug in einen sicheren Zustand, wenn ermittelt wird, insbesondere in Abhängigkeit zumindest einer der vorangehend genannten Bedingungen, dass die wenigstens eine Regelungsaufgabe nicht an das Fahrerassistenzsystem übergeben werden kann und wenn der Fahrzeugführer die entsprechende manuelle Regelung des Fahrzeugs unterbricht, insbesondere trotz der Information, dass die Regelungsaufgabe nicht übergeben werden kann. Zusätzlich oder alternativ kann das Fahrerassistenzsystem das Fahrzeug in einen sicheren Zustand überführen, insbesondere nachdem vorangehend eine Übergabe der wenigstens einen Regelungsaufgabe an das Fahrerassistenzsystem erfolgt ist, wenn ermittelt wird, dass die wenigstens Regelungsaufgabe wieder vom Fahrzeugführer übernommen werden muss und wenn der Fahrzeugführer die entsprechende manuelle Regelung des Fahrzeugs nicht wieder aufnimmt.

Dabei kann ein Zeitraum bzw. ein Zeitfenster definiert sein, innerhalb dem der Fahrer die Regelungsaufgabe wieder übernehmen muss, bevor das Fahrzeug vom Fahrerassistenzsystem in einen sicheren Zustand überführt wird.

Unter sicherem Zustand kann beispielsweise ein Ausrollen oder Abbremsen des Fahrzeugs, das autonome Führen des Fahrzeugs an den Fahrbahnrand bzw. auf einen Seitenstreifen und/oder ein Abstellen des Fahrzeugs am Straßenrand verstanden werden.

Gemäß einer besonderen Ausführungsvariante des erfindungsgemäßen Verfahrens wird der Fahrzeugführer über zumindest einen Grund informiert wird, weshalb die wenigstens eine Regelungsaufgabe nicht übergeben werden kann bzw. wieder übernommen werden muss. Bei dem wenigstens einen Grund handelt es sich dabei insbesondere um die eine oder die mehreren Bedingungen, anhand derer ermittelt wurde, ob die wenigstens eine Regelungsaufgabe an das Fahrerassistenzsystem übergeben werden kann bzw. vom Fahrzeugführer wieder übernommen werden muss. Die Information über den Grund kann beispielsweise mittels einer optischen Anzeigeeinrichtung realisiert sein.

Der Grund weshalb die wenigstens eine Regelungsaufgabe nicht übergeben werden kann, wird insbesondere dann angezeigt, wenn ermittelt wird, dass die Regelungsaufgabe nicht übergeben werden kann und der Fahrzeugführer durch Unterbrechen der entsprechenden manuellen Regelung versucht die Regelungsaufgabe an das Fahrerassistenzsystem zu übergeben.

Gemäß einer vorteilhaften Weiterbildung des erfindungsgemäßen Verfahrens wird, wenn vorangehend eine Übergabe wenigstens einer Regelungsaufgabe, insbesondere einer Regelungsaufgabe zur Querregelung des Fahrzeugs, an das Fahrerassistenzsystem erfolgt ist, und wenn vom Fahrerassistenzsystem weiterhin erkannt wird, dass ein Spurwechsel sinnvoll ist, dem Fahrzeugführer ein Spurwechsel empfohlen. Ein Spurwechsel kann beispielsweise sinnvoll sein, wenn ein in derselben Fahrspur vorausfahrendes Fahrzeug langsamer fährt als das eigene Fahrzeug oder wenn erkannt wird, dass die rechte Fahrspur frei ist, z.B. nach einem Überholmanöver. Ein Spurwechsel kann dem Fahrzeugführer insbesondere mittels einer entsprechenden Hinweis- bzw. Signaleinrichtung empfohlen werden, worauf der Fahrzeugführer einem autonomen Spurwechsel durch das Fahrerassistenzsystem zustimmen kann, beispielsweise durch Setzen des Fahrzeugblinkers.

Gemäß einer weiteren vorteilhaften Ausgestaltung des erfindungsgemäßen Verfahrens, wird in Abhängigkeit einer oder mehrerer Bedingungen ermittelt, insbesondere in Abhängigkeit einer der vorangehend genannten Bedingungen, ob der Fahrzeugführer seine Aufmerksamkeit vom Verkehrsgeschehen abwenden darf und/oder auf das Verkehrsgeschehen richten muss. Weiterhin wird bevorzugt ein entsprechender Hinweis an den Fahrzeugführer ausgegeben, d.h. ein Hinweis, dass dieser seine Aufmerksamkeit vom Verkehrsgeschehen abwenden darf bzw. auf das Verkehrsgeschehen richten muss.

Bevorzugt betreibt bzw. überführt das Fahrerassistenzsystem das Fahrzeug in einen vollautomatischen bzw. vollautonomen Fahrbetrieb, insbesondere einschließlich sämtlicher erforderlicher Längs- und Querregelungsaufgaben, wenn ermittelt wird, dass der Fahrer seine Aufmerksamkeit vom Verkehrsgeschehen abwenden darf und wenn erkannt wird, beispielsweise mittels einer Innenraum- bzw. Insassenkamera, dass der Fahrer seine Aufmerksamkeit vom Verkehrsgeschehen abwendet.

Das erfindungsgemäße Verfahren kann insbesondere auch bei Fahrerassistenzsystem mit Notbrems- und/oder Notlenkfunktion zum Einsatz kommen. Bei Notbremssystemen ist kann es beispielsweise Bedingung sein, dass der Fahrzeugführer das Gaspedal nicht oder nur leicht (ungewollt) betätigt. Betätigt er es doch, wird der Eingriff des Notbremssystems unterbrochen. Bei Notlenksystemen kann bei einem Notlenkeingriff, bei dem der Fahrzeugführer die Hände nicht am Lenkrad hat ein definierter Spurversatz stattfinden, der ausreicht um einem Hindernis auszuweichen. Auf den Notlenkeingriff kann weiterhin ein Notbremseingriff erfolgen.

Bei dem Fahrerassistenzsystem, bei welchem das erfindungsgemäße Verfahren zum Einsatz kommt, handelt es sich bevorzugt um ein System zur autonomen Abstandsregelung, Geschwindigkeitsregelung, Spurhalteunterstützung, Spurwechselunterstützung und/oder zur vollständig autonomen Fahrzeugführung. Das Fahrerassistenzsystem ist dabei vorzugweise mit geeigneten Erfassungseinrichtungen, d.h. beispielswiese mit Umfeld- bzw. Umgebungssensoren und/oder mit Sensoren zur Erfassung der Fahrdynamik ausgebildet, insbesondere zur Erfassung der jeweiligen Fahrsituation, von Objekten, Fahrspuren, Objektgeschwindigkeit, Abständen etc. sowie zur Bestimmung der einen oder mehreren Bedingungen, anhand derer ermittelt wird, ob eine oder mehrere Regelungsaufgaben zur autonomen Längs- und/oder Querregelung des Fahrzeugs, an das Fahrerassistenzsystem übergeben werden können. Das Fahrerassistenzsystem ist weiterhin vorzugsweise mit Stell- und/oder Steuerungseinrichtungen zur Umsetzung bzw. zur Wahrnehmung der Aufgaben zur autonomen Längs- und/oder Querregelung des Fahrzeugs ausgebildet bzw. verbunden.

Fahrerassistenzsysteme bei denen das erfindungsgemäße Verfahren zum Einsatz kommen kann, sind aus dem Stand der Technik bereits in unterschiedlichsten Ausgestaltungen bekannt. Bekannte Systeme sind beispielsweise Tempomat, Einparkhilfe, Bremsassistent, ACC (Adaptive Cruise Control) bzw. Abstandsregeltempomat, Abstandswarner, Abbiegeassistent, Stauassistent, Spurerkennungssystem, Spurhalteassistent, Spurhalteunterstützung, Spurwechselassistent, ISA (Intelligent Speed Adaption), ANB (Automatische Notbremsung) und Kurvenassistent.

Es kann insbesondere ein bereits aus dem Stand der Technik bekanntes Fahrerassistenzsystem zur Umsetzung des erfindungsgemäßen Verfahrens weitergebildet sein, vorzugsweise derart, dass das Fahrerassistenz Mittel umfasst oder mit Mitteln verbunden ist zur Ermittlung, ob wenigstens eine Regelungsaufgabe an das Fahrerassistenzsystem übergeben werden kann, sowie weiterhin Mittel umfasst oder mit Mittel verbunden ist, zur Ausgabe wenigstens einer der folgenden Hinweise:
- Regelungsaufgabe kann an das Fahrerassistenzsystem übergeben werden.
- Regelungsaufgabe kann nicht an das Fahrerassistenzsystem übergeben werden.
- Regelungsaufgabe muss wieder vom Fahrzeugführer übernommen werden.

Das erfindungsgemäße Fahrerassistenzsystem ist weiterhin vorzugsweise derart ausgebildet, dass die Übergabe der wenigstens einen Regelungsaufgabe erfolgt, wenn der Fahrzeugführer eine entsprechende manuelle Regelung des Fahrzeugs unterbricht.

Weitere Vorteile sowie optionale Ausgestaltungen der Erfindung gehen aus den nachfolgenden Ausführungsbeispielen hervor.

Gemäß einem Ausführungsbeispiel kann das erfindungsgemäße Verfahren bei einem oder mehreren Fahrerassistenzsystemen eines Fahrzeug zum Einsatz kommen, wobei es sich beispielsweise bei einem ersten Fahrerassistenzsystem um ein System zur autonomen Längsregelung, beispielweise ein Geschwindigkeits- und Abstandsregelungssystem, z.B. ein ACC-System (Adaptive Cruise Control), und bei einem zweiten Fahrerassistenzsystem um ein System zur autonomen Querregelung handelt, beispielweise ein Spurhalteassistenzsystem.

Die beiden Fahrerassistenzsysteme sind zur Umsetzung des erfindungsgemäßen Verfahren derart ausgebildet, dass der Fahrzeugführer mittels akustischer Signaleinrichtungen und mittels einer Anzeigeeinrichtung im Bereich des Armaturenbretts darüber informiert, ob und welche Regelungsaufgaben an die Fahrerassistenzsysteme übergeben werden können.

Die Fahrerassistenzsysteme sind weiterhin zur Umsetzung des erfindungsgemäßen Verfahrens derart ausgebildet, dass die Übergabe der jeweiligen Regelungsaufgabe erfolgt, wenn der Fahrzeugführer die manuelle Regelung des Fahrzeugs, welche der jeweiligen Regelungsaufgaben entspricht, unterbricht.

Als Beispiel sei eine Fahrsituation beschrieben, in welcher der Fahrzeugführer das Fahrzeug manuell auf einer Autobahn führt. Der Fahrzeugführer beschleunigt dabei das Fahrzeug bis auf eine bestimmte Geschwindigkeit, beispielsweise eine Wunschgeschwindigkeit. Sind daraufhin eine oder mehrere Bedingungen erfüllt, anhand derer das Fahrerassistenzsystem zur autonomen Längsregelung ermittelt, ob die Regelungsaufgabe zur Längsregelung vom Fahrzeugführer an das Fahrerassistenzsystem übergeben kann, wird dies dem Fahrzeugführer über die Ausgabe eines bestimmten Signaltons angezeigt. Der Fahrzeugführer kann daraufhin den Fuß vom Gaspedal nehmen, was in diesem Fall das Unterbrechen der manuellen Längsregelung des Fahrzeugs bedeutet, und woraufhin das Fahrerassistenzsystem die Geschwindigkeit des Fahrzeugs autonom aufrecht erhält und damit die Regelungsaufgabe übernimmt. Bremst der Fahrzeugführer, wird das Fahrerassistenzsystem bzw. die autonome Längsregelung deaktiviert. Geht der Fahrzeugführer wieder von der Bremse, rollt das Fahrzeug aus und es erfolgt vorzugsweise erst dann wieder eine Übernahme der autonomen Längsregelung, wenn der Fahrzeugführer erneut das Gaspedal betätigt hat.

Beim Betrieb eines Fahrerassistenzsystems gemäß dem erfindungsgemäßen Verfahren bleiben vorzugsweise Sicherheitssysteme wie Notbremsassistent oder Heading Control ständig aktiv, um eine gleichbleibende Fahrsicherheit zu gewährleisten.

Bei der Bedingung, anhand derer das Fahrerassistenzsystem ermittelt, ob bzw. dass die Regelungsaufgabe zur Längsregelung übergeben werden kann, kann es sich in diesem Fall beispielsweise um das Erreichen eines bestimmten Mindestabstands zu einem vorausfahrenden Fahrzeug handeln. Sind im weiteren Fahrverlauf eine oder mehrere Bedingungen erfüllt, anhand derer das Fahrerassistenzsystem zur autonomen Querregelung ermittelt, ob bzw. dass die Regelungsaufgabe zur Querregelung an das Fahrerassistenzsystem übergeben werden kann, beispielsweise anhand der sicheren Erkennung der linken und rechten Fahrspurbegrenzung (z.B. Fahrbahnmarkierungen), wird dem Fahrzeugführer über die Ausgabe bzw. Anzeige eines Symbols im Armaturenbrett angezeigt, dass dieser die Hände vom Lenkrad nehmen darf. Der Fahrzeugführer kann daraufhin die Hände vom Lenkrad nehmen, was das Unterbrechen der manuellen Querregelung des Fahrzeugs bedeutet, und woraufhin das Fahrerassistenzsystem die Querregelungsaufgabe übernimmt, in diesem Fall durch das Halten der aktuellen Fahrspur mittels autonomer Lenkeingriffe.

Bei der Anzeige, die den Fahrzeugführer darüber informiert, dass dieser die Hände vom Lenkrad nehmen und damit die Regelungsaufgabe zur Querregelung des Fahrzeugs an das Fahrerassistenzsystem übergeben kann, handelt es sich beispielsweise um die Anzeige eines geeigneten Symbols auf einer Anzeigeeinrichtung im Bereich des Armaturenbretts, beispielsweise eines grünes Symbol umfassend ein Lenkrad mit daneben befindlichen Händen. Bei der Anzeige, die den Fahrzeugführer darüber informiert, dass dieser die Hände wieder an das Lenkrad nehmen und damit die Regelungsaufgabe zur Querregelung des Fahrzeugs wieder übernehmen muss, handelt es sich beispielsweise entsprechend um ein rotes Symbol umfassend ebenfalls ein Lenkrad mit Händen, die das Lenkrad umgreifen.

Erfindungsgemäß kann dem Fahrzeugführer zusätzlich angezeigt werden, weshalb eine Regelungsaufgabe momentan nicht übergeben werden kann oder weshalb diese wieder übernommen werden muss. Ist beispielsweise ein bestimmter Geschwindigkeitsschwellwert überschritten, z.B. 80 Km/h, und ist es eine Bedingung dafür, dass die Querregelung des Fahrzeugs vom Fahrzeugführer an das Fahrerassistenzsystem übergeben werden kann, dass dieser Geschwindigkeitsschwellwert nicht überschritten wird, kann dieses dem Fahrzeugführer durch ein entsprechendes zusätzliches Symbol angezeigt werden, beispielsweise ein Geschwindigkeitsbegrenzungszeichen mit einer ausgewiesenen Maximalgeschwindigkeit von 80 Km/h.

Taucht im vorliegenden Beispiel im weiteren Fahrverlauf vor dem Fahrzeug ein langsameres Fahrzeug auf, kann gemäß einer bevorzugten Ausgestaltung des erfindungsgemäßen Verfahrens das Fahrerassistenzsystem derart ausgebildet sein, dass dem Fahrzeugführer ein Wechsel der Fahrspur empfohlen wird. Das Fahrerassistenzsystem kann in dem Fall erfindungsgemäß derart ausgebildet, dass der Fahrzeugführer, z.B. über die Betätigung des Fahrzeugblinkers, einem autonomen Spurwechsel zustimmen kann, woraufhin das Fahrerassistenzsystem selbstständig die Fahrspur wechselt.

Zur weiteren beispielhaften Darstellung des erfindungsgemäßen Verfahrens sei nun eine Fahrsituation beschrieben, in der sich das Fahrzeug aktuell in einer autonomen Längs- und Querregelung durch die beiden Fahrerassistenzsysteme befindet, wobei sich das Fahrzeug dem Ende eines Verkehrsstaus nähert, d.h. auf einen Verkehrsstau auffährt. In diesem Fall können die Fahrerassistenzsysteme erfindungsgemäß derart ausgebildet sein, dass die Geschwindigkeit des Fahrzeugs autonom herunter geregelt wird und das Fahrzeug selbstständig, mittels autonomer Längs- und Querregelung, vom Fahrerassistenzsystem im Stau geführt wird. Wird in Abhängigkeit einer definierter Bedingungen ermittelt, dass der Fahrzeugführer seine Aufmerksamkeit vom Verkehrsgeschehen abwenden darf, wird erfindungsgemäß ein entsprechender Hinweis an den Fahrzeugführer ausgegeben, woraufhin dieser seine Aufmerksamkeit vom Verkehrsgeschehen abwenden kann. Bei der einen definierten Bedingung kann es sich beispielweise um einen bestimmten unteren Grenzwert für die Fahrzeuggeschwindigkeit handeln, bei dem die Zuverlässigkeit und/oder Genauigkeit der Erfassungssysteme eines oder mehrerer Fahrerassistenzsysteme derart sichergestellt ist, dass mit hinreichend hoher Wahrscheinlichkeit keine Fehler auftreten können.

Für den Fall, dass sich der Verkehrsstau auflöst, können die Fahrerassistenzsysteme erfindungsgemäß weiterhin derart ausgebildet sein, dass das Fahrzeug auf eine bestimmte Geschwindigkeit herauf beschleunigt wird, wobei bei Erreichen eines Grenzwerts für die Geschwindigkeit, der Fahrzeugführer informiert wird, dass dieser seine Aufmerksamkeit wieder auf das Verkehrsgeschehen richten muss. Richtet der Fahrzeugführer seine Aufmerksamkeit daraufhin auf das Verkehrsgeschehen, wird die autonome Längs- und Querregelung durch die Fahrerassistenzsysteme fortgesetzt.

Für die Überwachung, ob der Fahrzeugführer seine Aufmerksamkeit auf das Verkehrsgeschehen richtet oder nicht (d.h. abwendet) kann eine Innenraumkamera zur Fahrerbeobachtung verwendet werden.

Im Weiteren Fahrverlauf kann beispielsweise eine Fahrsituation auftreten, in der die Spurmarkierung wegfällt und/oder diese von einem Erfassungssystem des Fahrerassistenzsystem nichtmehr erkannt wird, wodurch insbesondere eine Bedingung dafür nichtmehr erfüllt sein kann, dass die Regelungsaufgabe zur Querregelung des Fahrzeugs an das Fahrerassistenzsystem übergeben werden kann. Mittels der Ausgabe eines Hinweises wird der Fahrzeugführer erfindungsgemäß darüber informiert, dass dieser die Regelungsaufgabe zur Querregelung des Fahrzeugs wieder übernehmen muss. Die Fahrerassistenzsystem können dabei gemäß einer bevorzugten Ausführung des erfindungsgemäßen Verfahrens derart ausgebildet sein, dass das Fahrzeug verzögert wird, wenn der Fahrzeugführer innerhalb eines ersten definierten Zeitfensters die manuelle Regelung des Fahrzeugs nicht übernimmt, sowie derart, dass das Fahrzeug auf einen Standstreifen geführt wird, wenn der Fahrzeugführer innerhalb eines zweiten definierten Zeitfensters, die manuelle Regelung des Fahrzeugs noch immer nicht übernimmt.

## Patentansprüche

1. Verfahren zur Aktivierung und Deaktivierung eines Fahrerassistenzsystems,
das zur autonomen Längs- und/oder Querregelung eines Fahrzeugs ausgebildet ist,
wobei wenigstens eine Regelungsaufgabe zur Längs-und/oder Querregelung des Fahrzeugs vom Fahrzeugführer an das Fahrerassistenzsystem übergeben werden kann,
**dadurch gekennzeichnet, dass**
die Aktivierung und Deaktivierung des Fahrerassistenzsystems ohne zusätzliches Bedienelement erfolgt, derart dass der Fahrzeugführer informiert wird, ob die Regelungsaufgabe an das Fahrerassistenzsystem übergeben werden kann, und
die Übergabe der Regelungsaufgabe erfolgt, wenn der Fahrzeugführer eine entsprechende manuelle Regelung des Fahrzeugs unterbricht.

2. Verfahren nach Anspruch 1,
**dadurch gekennzeichnet, dass**
der Fahrzeugführer, wenn die Übergabe der Regelungsaufgabe an das Fahrerassistenzsystem erfolgt ist, informiert wird, ob dieser die Regelungsaufgabe wieder übernehmen muss,
wobei die Übernahme der Regelungsaufgabe erfolgt, wenn der Fahrzeugführer die entsprechende manuelle Regelung des Fahrzeugs wieder aufnimmt.

3. Verfahren nach einem der vorangegangenen Ansprüche,
**dadurch gekennzeichnet, dass**
der Fahrzeugführer mittels einer Ausgabe wenigstens eines Hinweises informiert wird, ob die Regelungsaufgabe an das Fahrerassistenzsystem übergeben werden kann bzw. ob der Fahrzeugführer die wenigstens eine Regelungsaufgabe wieder übernehmen muss,
wobei es sich um wenigstens einen der folgenden Hinweise handelt:
- Regelungsaufgabe kann an das Fahrerassistenzsystem übergeben werden;
- Regelungsaufgabe kann nicht an das Fahrerassistenzsystem übergeben werden;
- Regelungsausgabe muss vom Fahrzeugführer wieder übernommen werden.

4. Verfahren nach einem der vorangegangenen Ansprüche,
**dadurch gekennzeichnet, dass**
in Abhängigkeit einer oder mehrerer Bedingungen ermittelt wird, ob die Regelungsaufgabe an das Fahrerassistenzsystem übergeben werden kann bzw. ob der Fahrzeugführer die Regelungsaufgabe wieder übernehmen muss, wobei es sich insbesondere um wenigstens eine der folgenden Bedingungen handelt:
- Einer oder mehrere Sensoren zur Umgebungserfassung sind betriebsbereit;
- Zuverlässige Umgebungserfassung mittels eines oder mehrerer Sensoren;
- Zuverlässige Erkennung einer Fahrspur;
- Zuverlässige Erfassung eines Folgeobjekts;
- Befahren eines bestimmten Straßentyps;
- Überschreiten einer bestimmten Geschwindigkeit;
- Unterschreiten einer bestimmten Geschwindigkeit;
- Überschreiten eines bestimmten Abstands zu einem vorausfahrenden Fahrzeug;
- Unterschreiten eines bestimmten Abstands zu einem vorausfahrenden Fahrzeug;
- Fahrzeugführer ist aufmerksam.

5. Verfahren nach einem der vorangegangenen Ansprüche,
**dadurch gekennzeichnet, dass**
das Fahrerassistenzsystem das Fahrzeug in einen sicheren Zustand überführt, wenn
die Regelungsaufgabe nicht an das Fahrerassistenzsystem übergeben werden kann und
der Fahrzeugführer die entsprechende manuelle Regelung des Fahrzeugs unterbricht,
und/oder
die Regelungsaufgabe wieder vom Fahrzeugführer übernommen werden muss und
der Fahrzeugführer die entsprechende manuelle Regelung des Fahrzeugs nicht wieder aufnimmt.

6. Verfahren nach einem der vorangegangenen Ansprüche,
**dadurch gekennzeichnet, dass**
der Fahrzeugführer über zumindest einen Grund informiert wird, insbesondere über die eine oder die mehreren Bedingungen, weshalb die Regelungsaufgabe nicht übergeben werden kann bzw. wieder übernommen werden muss.

7. Verfahren nach einem der vorangegangenen Ansprüche,
**dadurch gekennzeichnet, dass**
dem Fahrzeugführer ein Spurwechsel empfohlen wird, wenn eine Übergabe wenigstens einer Regelungsaufgabe zur Querregelung des Fahrzeugs an das Fahrerassistenzsystem erfolgt ist und
das Fahrerassistenzsystem erkennt, dass ein Spurwechsel sinnvoll ist.

8. Verfahren nach einem der vorangegangenen Ansprüche,
**dadurch gekennzeichnet, dass**
in Abhängigkeit der einen oder mehreren Bedingungen ermittelt wird, ob der Fahrzeugführer seine Aufmerksamkeit vom Verkehrsgeschehen abwenden darf und/oder wieder auf das Verkehrsgeschehen richten muss, und
ein entsprechender Hinweis an den Fahrzeugführer ausgegeben wird,
dass dieser seine Aufmerksamkeit vom Verkehrsgeschehen abwenden darf bzw. auf das Verkehrsgeschehen richten muss.

9. Verfahren nach Anspruch 8,
**dadurch gekennzeichnet, dass**,
das Fahrerassistenzsystem das Fahrzeug in einem vollautomatischen Fahrbetrieb betreibt, wenn der Fahrzeugführer seine Aufmerksamkeit vom Verkehrsgeschehen abwenden darf und
der Fahrzeugführer seine Aufmerksamkeit vom Verkehrsgeschehen abwendet.

10. Verfahren nach einem der vorangegangenen Ansprüche,
**dadurch gekennzeichnet, dass**
es sich bei dem Fahrerassistenzsystem um ein System zur autonomen Abstandsregelung, Geschwindigkeitsregelung, Spurhalteunterstützung, Spurwechselunterstützung und/oder vollständig autonomen Fahrzeugführung handelt.

11. Fahrerassistenzsystem, das zur autonomen Längs-und/oder Querregelung eines Fahrzeugs ausgebildet ist und bei dem wenigstens eine Regelungsaufgabe zur Längs-und/oder Querregelung des Fahrzeugs vom Fahrzeugführer an das Fahrerassistenzsystem übergeben werden kann,
**dadurch gekennzeichnet, dass**
das Fahrerassistenzsystem zur Umsetzung eines Verfahrens nach einem der vorangegangenen Ansprüche ausgebildet ist, wobei
das Fahrerassistenzsystem Mittel umfasst oder mit Mitteln verbunden ist zur Ermittlung, ob die wenigstens eine Regelungsaufgabe an das Fahrerassistenzsystem übergeben werden kann, und
Mittel umfasst oder mit Mittel verbunden ist zur Ausgabe wenigstens eines der Hinweise:
- Regelungsaufgabe kann an das Fahrerassistenzsystem übergeben werden;
- Regelungsaufgabe kann nicht an das Fahrerassistenzsystem übergeben werden;
- Regelungsaufgabe muss wieder vom Fahrzeugführer übernommen werden;
und wobei die Aktivierung und Deaktivierung des Fahrerassistenzsystems ohne zusätzliches Bedienelement erfolgt, derart dass die Übergabe der wenigstens einen Regelungsaufgabe erfolgt, wenn der Fahrzeugführer eine entsprechende manuelle Regelung des Fahrzeugs unterbricht.

## Claims

1. A method for activating and deactivating a driver assistance system which is designed for performing autonomous longitudinal and/or transverse control of a vehicle,
wherein at least one control task for performing the longitudinal and/or transverse control of the vehicle can be handed over from the vehicle driver to the driver assistance system,
**characterised in that**
the activation and deactivation of the driver assistance system takes place without an additional operating element in such a way that the vehicle driver is informed whether the control task can be handed over to the driver assistance system, and
the handover of the control task takes place when the vehicle driver interrupts a corresponding manual control process of the vehicle.

2. The method of claim 1,
**characterised in that**,
once the handover of the control task to the driver assistance system has taken place, the vehicle driver is informed whether he has to reassume the control task,
wherein the handover of the control task takes place when the vehicle driver resumes the corresponding manual control process of the vehicle.

3. The method according to any one of the preceding claims,
**characterised in that**
the vehicle driver is informed by means of an output of at least one indication whether the control task can be handed over to the driver assistance system or whether the vehicle driver has to reassume the at least one control task,
wherein the indication is at least one of the following:
- control task can be handed over to the driver assistance system;
- control task cannot be handed over to the driver assistance system;
- control task has to be reassumed by the vehicle driver.

4. The method according to any one of the preceding claims,
**characterised in that**
it is determined as a function of one or more conditions whether the control task can be handed over to the driver assistance system or whether the vehicle driver has to reassume the control task, wherein the conditions are in particular at least one of the following:
- one or more sensors for sensing the driving environment are operational;
- reliable sensing of the driving environment by one or more sensors;
- reliable lane detection;
- reliable sensing of an object to be followed;
- driving on a certain type of road;
- exceeding a certain speed;
- falling below a certain speed;
- exceeding a certain distance from a preceding vehicle;
- falling below a certain distance from a preceding vehicle;
- vehicle driver is alert.

5. The method according to any one of the preceding claims,
**characterised in that**
the driver assistance system transfers the vehicle into a safe state if
the control task cannot be handed over to the driver assistance system and
the vehicle driver interrupts the corresponding manual control process of the vehicle,
and/or
the control task has to be reassumed by the vehicle driver and
the vehicle driver does not resume the corresponding manual control process of the vehicle.

6. The method according to any one of the preceding claims,
**characterised in that**
the vehicle driver is informed about at least one reason, in particular about the one or more conditions, why the control task cannot be handed over or has to be reassumed.

7. The method according to any one of the preceding claims,
**characterised in that**
a lane change is recommended to the vehicle driver
if a handover of at least one control task for transverse control of the vehicle to the driver assistance system has taken place and
the driver assistance system detects that a lane change is sensible.

8. The method according to any one of the preceding claims,
**characterised in that**
it is determined as a function of the one or more conditions whether the vehicle driver may divert his attention away from the traffic situation and/or has to direct his attention back to the traffic situation and
a corresponding indication is given to the vehicle driver
that he may divert his attention away from the traffic situation or has to direct his attention to the traffic situation.

9. The method of claim 8,
**characterised in that**
the driver assistance system operates the vehicle in a fully automatic driving mode if the vehicle driver may divert his attention away from the traffic situation and
the vehicle driver diverts his attention away from the traffic situation.

10. The method according to any one of the preceding claims,
**characterised in that**
the driver assistance system is a system for autonomous distance control, speed control, lane keeping support, lane change support and/or fully autonomous vehicle driving.

11. A driver assistance system which is designed for performing autonomous longitudinal and/or transverse control of a vehicle and in which at least one control task for performing the longitudinal and/or transverse control of the vehicle can be handed over from the vehicle driver to the driver assistance system,
**characterised in that**
the driver assistance system is configured for implementing a method according to any one of the preceding claims, wherein
the driver assistance system comprises means or is connected to means for determining whether the at least one control task can be handed over to the driver assistance system and
comprises means or is connected to means for outputting at least one of the indications:
- control task can be handed over to the driver assistance system;
- control task cannot be handed over to the driver assistance system;
- control task has to be reassumed by the vehicle driver;
and wherein the activation and deactivation of the driver assistance system takes place without an additional operating element in such a way that the handover of the at least one control task takes place when the vehicle driver interrupts a corresponding manual control process of the vehicle.

## Revendications

1. Procédé pour l'activation et la désactivation d'un système d'assistance au conducteur, lequel est formé pour la commande autonome longitudinale et/ou latérale d'un véhicule,
au moins une tâche de commande pour la commande longitudinale et/ou latérale du véhicule pouvant être remise par le conducteur du véhicule au système d'assistance au conducteur,
**caractérisé en ce que**
l'activation et la désactivation du système d'assistance au conducteur sont effectuées sans élément de commande supplémentaire, de telle sorte que le conducteur du véhicule est informé du fait de savoir si la tâche de commande peut être remise au système d'assistance au conducteur, et
la remise de la tâche de commande est effectuée lorsque le conducteur du véhicule interrompt une commande manuelle du véhicule correspondante.

2. Procédé selon la revendication 1,
**caractérisé en ce que**
le conducteur du véhicule est informé du fait de savoir s'il doit reprendre la tâche de commande lorsque la remise de la tâche de commande au système d'assistance au conducteur a été effectuée,
la reprise de la tâche de commande étant effectuée lorsque le conducteur du véhicule reprend la commande manuelle du véhicule correspondante.

3. Procédé selon l'une quelconque des revendications précédentes, **caractérisé en ce que**
le conducteur de véhicule est informé au moyen de l'émission d'au moins une indication du fait de savoir si la tâche de commande peut être remise au système d'assistance au conducteur ou si le conducteur du véhicule doit reprendre l'au moins une tâche de commande,
sachant qu'il s'agit d'au moins une des indications suivantes :
- la tâche de commande peut être remise au système d'assistance au conducteur ;
- la tâche de commande ne peut pas être remise au système d'assistance au conducteur ;
- la tâche de commande doit être reprise par le conducteur du véhicule.

4. Procédé selon l'une quelconque des revendications précédentes,
**caractérisé en ce que**,
en fonction d'une ou de plusieurs conditions, le fait de savoir si la tâche de commande peut être remise au système d'assistance au conducteur ou si le conducteur du véhicule doit reprendre l'au moins une tâche de commande est déterminé, sachant qu'il s'agit en particulier d'au moins une des conditions suivantes :
- un ou plusieurs capteurs pour la détection de l'environnement sont opérationnels ;
- détection de l'environnement fiable au moyen d'un ou de plusieurs capteurs ;
- détection fiable d'une voie de circulation ;
- détection fiable d'un objet précédant ;
- conduite sur un type de route déterminé ;
- dépassement d'une certaine vitesse supérieure ;
- dépassement d'une certaine vitesse inférieure ;
- dépassement d'une certaine distance supérieure avec un véhicule précédant ;
- dépassement d'une certaine distance inférieure avec un véhicule précédant ;
- le conducteur du véhicule est attentif.

5. Procédé selon l'une quelconque des revendications précédentes,
**caractérisé en ce que**
le système d'assistance au conducteur fait passer le véhicule dans un état sûr, lorsque
la tâche de commande ne peut pas être remise au système d'assistance au conducteur et
le conducteur du véhicule interrompt la commande manuelle du véhicule correspondante, et/ou
la tâche de commande doit être reprise par le conducteur du véhicule et
le conducteur du véhicule ne reprend pas la commande manuelle du véhicule correspondante.

6. Procédé selon l'une quelconque des revendications précédentes, **caractérisé en ce que**
le conducteur du véhicule est informé d'au moins un motif, en particulier de l'une ou des plusieurs conditions, pour lequel la tâche de commande ne peut pas être remise ou doit être reprise.

7. Procédé selon l'une quelconque des revendications précédentes, **caractérisé en ce que**
un changement de voie est conseillé au conducteur du véhicule lorsqu'une remise au système d'assistance au conducteur d'au moins une tâche de commande pour la commande latérale du véhicule est effectuée et
le système d'assistance au conducteur détecte qu'un changement de voie est pertinent.

8. Procédé selon l'une quelconque des revendications précédentes, **caractérisé en ce que**
le fait de savoir si le conducteur du véhicule peut détourner son attention de la circulation et/ou s'il doit de nouveau tourner son attention vers la circulation est déterminé en fonction de l'une ou des plusieurs conditions, et
une indication correspondante signalant au conducteur du véhicule qu'il peut détourner son attention de la circulation ou doit tourner son attention vers la circulation est donnée au conducteur du véhicule.

9. Procédé selon la revendication 8,
**caractérisé en ce que**
le système d'assistance au conducteur dirige le véhicule par un mode de conduite entièrement automatique lorsque le conducteur du véhicule peut détourner son attention de la circulation et le conducteur du véhicule détourne son attention de la circulation.

10. Procédé selon l'une quelconque des revendications précédentes, **caractérisé en ce que**
le système d'assistance au conducteur est un système pour la commande de distance, la commande de vitesse, le soutien au maintien dans la voie, le soutien au changement de voie autonomes et/ou le guidage du véhicule entièrement autonome.

11. Système d'assistance au véhicule, lequel est formé pour la commande autonome longitudinale et/ou latérale d'un véhicule et sur lequel au moins une tâche de commande pour la commande longitudinale et/ou latérale du véhicule peut être remise par le conducteur du véhicule au système d'assistance au conducteur,
**caractérisé en ce que**
le système d'assistance au conducteur est formé pour l'exécution d'un procédé selon l'une des revendications précédentes,
le système d'assistance au conducteur comprenant des moyens ou étant relié avec des moyens pour la détermination du fait de savoir si l'au moins une tâche de commande peut être remise au système d'assistance au conducteur, et
comprenant des moyens ou étant relié avec des moyens pour l'émission d'au moins une des indications :
- la tâche de commande peut être remise au système d'assistance au conducteur ;
- la tâche de commande ne peut pas être remise au système d'assistance au conducteur ;
- la tâche de commande doit être reprise par le conducteur du véhicule ;
et l'activation et la désactivation du système d'assistance au conducteur étant effectuées sans élément de commande supplémentaire, de telle sorte que la remise de l'au moins une tâche de commande est effectuée lorsque le conducteur du véhicule interrompt une commande manuelle du véhicule correspondante.
